(19) **Europäisches Patentamt / European Patent Office / Office européen des brevets**

(11) **EP 4 224 136 B1**

(12) **EUROPEAN PATENT SPECIFICATION**

(45) Date of publication and mention
of the grant of the patent:
**06.05.2026  Bulletin 2026/19**

(21) Application number: **21875465.3**

(22) Date of filing: **24.09.2021**

(51) International Patent Classification (IPC):
**G01M 13/04** (2019.01)     **G01K 1/14** (2021.01)
**G01K 7/34** (2006.01)     **F16C 19/02** (2006.01)
**F16C 19/22** (2006.01)     **F16C 19/52** (2006.01)
**F16C 33/66** (2006.01)

(52) Cooperative Patent Classification (CPC):
**G01M 13/04; F16C 19/02; F16C 19/22;
F16C 19/525; F16C 33/6633; F16C 33/6688;
G01K 7/343;** F16C 2233/00

(86) International application number:
**PCT/JP2021/035205**

(87) International publication number:
**WO 2022/071163 (07.04.2022 Gazette 2022/14)**

(54) **TEMPERATURE DERIVATION METHOD FOR OIL FILM, TEMPERATURE DERIVATION DEVICE, AND PROGRAM**

TEMPERATURABLEITUNGSVERFAHREN FÜR ÖLFILM, TEMPERATURABLEITUNGSVORRICHTUNG UND PROGRAMM

PROCÉDÉ D'OBTENTION DE LA TEMPÉRATURE D'UN FILM D'HUILE, DISPOSITIF D'OBTENTION DE TEMPÉRATURE ET PROGRAMME

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.09.2020  JP 2020163962
25.08.2021  JP 2021137563**

(43) Date of publication of application:
**09.08.2023  Bulletin 2023/32**

(73) Proprietor: **NSK Ltd.
Tokyo 141-8560 (JP)**

(72) Inventors:
• **IWASE, Shunsuke**
**Fujisawa-shi, Kanagawa 251-8501 (JP)**
• **MARUYAMA, Taisuke**
**Fujisawa-shi, Kanagawa 251-8501 (JP)**

(74) Representative: **Grünecker Patent- und
Rechtsanwälte
PartG mbB
Leopoldstraße 4
80802 München (DE)**

(56) References cited:
**WO-A1-2017/188314      WO-A1-2020/149233
WO-A2-99/58965      DE-B4- 102018 203 258
JP-A- 2012 052 941      US-A- 5 788 376
US-A1- 2011 265 569**

• **HAKIM RAYMOND M.: "Distribution of Relaxation Times in an Insulating Oil", IEEE TRANSACTIONS ON ELECTRICAL INSULATION, vol. EI-6, no. 4, 1 December 1971 (1971-12-01), US, pages 158 - 164, XP093130245, ISSN: 0018-9367, DOI: 10.1109/TEI.1971.299171**

**Description**

TECHNICAL FIELD

The present invention relates to an oil film temperature derivation method, a temperature derivation device, and a program.

BACKGROUND ART

In the related art, in bearing devices, a configuration in which a lubricant (for example, lubricating oil or grease) is used to lubricate rotation has been widely used. On the other hand, by periodically diagnosing a state of rotating parts such as bearing devices, damage and wear can be detected at an early stage to prevent failures of the rotating parts from occurring.

The bearing device using a lubricant is required to appropriately detect the state related to the lubricant in order to diagnose the operating state. For example, Patent Literature 1 discloses a method for detecting an oil film thickness of a lubricant and a metal contact ratio in a rolling device.

CITATION LIST

PATENT LITERATURE

Patent Literature 1: JP-A-2019-211317. Hakim Raymond M.: "Distribution of Relaxation Times in an Insulating Oil",IEEE Transactions on Electrical Insulation, vol. EI-6, no. 4, 1 December 1971 (1971-12-01), pages 158-164, XP093130245, US ISSN: 0018-9367, DOI: 10.1109/TEI.1971.299171 discloses an investigation of the dielectric properties of an insulating oil. The dielectric constant of the oil is studied as a function of the frequency of the applied excitation signal.

SUMMARY OF INVENTION

TECHNICAL PROBLEM

It is very useful to grasp conditions around a lubricant in a device such as a bearing device to prevent damage to a device. The conditions around the lubricant include a temperature of an oil film due to the lubricant. In a method of Patent Literature 1, although a film thickness of a lubricant and a metal contact ratio can be derived, the temperature of the lubricant is not measured. When measuring the temperature of an oil film due to a lubricant whose temperature is expected to change, there are restrictions according to the installation position of a temperature sensor and control during measurement based on the measurement principle of the temperature sensor. For example, infrared methods such as thermography require constant thermal radiation of the object. In addition, in the temperature diagnosis method by means of thermochromism, or the like, the object needs to exist in a place where the object can be diagnosed.

In view of the above problems, an object of the present invention is to provide a method for easily deriving an oil film temperature of a lubricant in a device.

SOLUTION TO PROBLEM

According to the invention, there is provided a temperature derivation method as defined in claim 1.

According to the invention, there is provided a temperature derivation device as defined in claim 3.

ADVANTAGEOUS EFFECTS OF INVENTION

According to the present invention, it is possible to provide a method for easily deriving the oil film temperature of a lubricant in a device.

BRIEF DESCRIPTION OF DRAWINGS

Fig. 1 is a schematic diagram illustrating an example of a configuration of a device according to one embodiment of the present invention.

Figs. 2A and 2B are diagrams illustrating a relationship between a frequency and a dielectric constant.

Fig. 3 is a diagram illustrating a relationship between a relaxation time and an absolute temperature.

Fig. 4 is a diagram illustrating derivation of parameters by fitting to a theoretical formula.

Fig. 5 is a diagram illustrating a correlation between a temperature and a relaxation time.

Fig. 6 is a diagram illustrating an example of a derivation result of an oil film temperature according to the present embodiment.

Fig. 7 is a flowchart of processing when deriving a temperature according to one embodiment of the present invention.

DESCRIPTION OF EMBODIMENTS

Hereinafter, an aspect for implementing the present invention is described with reference to drawings. It is noted that the embodiment described below is one embodiment for describing the invention of the present application, and is not intended to be construed as limiting the invention of the present application, and all configurations described in the embodiments are not essential configurations for solving the problems of the present invention. In addition, in each drawing, the same component is denoted by the same reference number to indicate a correspondence.

<First Embodiment>

Hereinafter, a first embodiment according to the present invention will be described. It is noted that, in the following description, a ball bearing is used as an example of a rolling bearing, but the present invention is not limited thereto, and can be applied to rolling bearings having other configurations. For example, as types of the rolling bearings to which the present invention can be applied, there are exemplified deep groove ball bearings, angular contact ball bearings, tapered roller bearings, cylindrical roller bearings, and self-aligning roller bearings.

[Device Configuration]

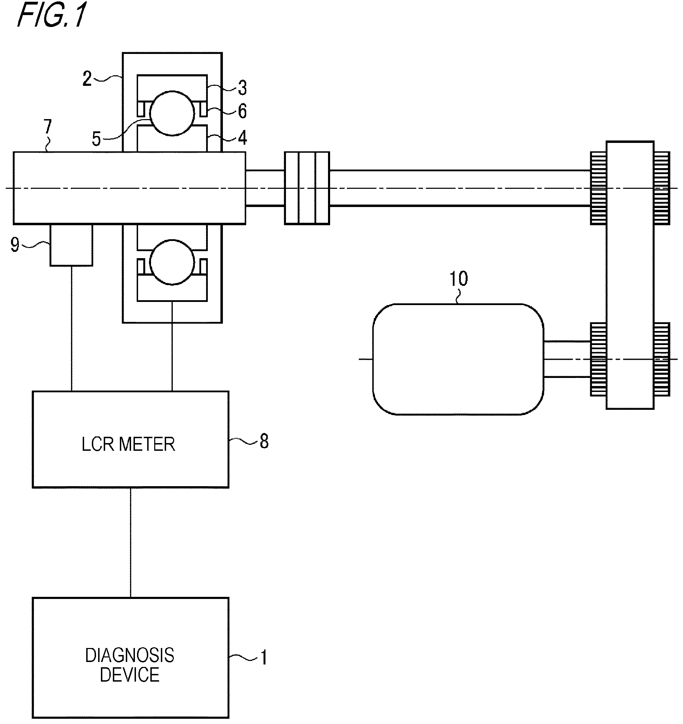

Fig. 1 is a schematic configuration diagram illustrating an example of the overall configuration when performing diagnosis with a diagnosis device 1 according to this embodiment. In Fig. 1, illustrated are a bearing device 2 to which a temperature derivation method according to this embodiment is applied and the diagnosis device 1 performing temperature derivation and diagnosis of an oil film. It is noted that the configuration illustrated in Fig. 1 is an exemplary one, and a different configuration may be used according to a configuration of the bearing device 2 and the like. In addition, although Fig. 1 illustrates a configuration in which the bearing device 2 includes one rolling bearing, the present invention is not limited thereto, and one bearing device 2 may include a plurality of rolling bearings.

In the bearing device 2, the rolling bearings rotatably support a rotating shaft 7. The rotating shaft 7 is supported by a housing (not illustrated) that covers an outside of the rotating shaft 7 via the rolling bearing that is a rotating component. The rolling bearing has an outer ring (outer member) 3 which is a fixing ring fitted inside the housing, an inner ring (inner member) 4 which is a rotating ring fitted on the rotating shaft 7, a plurality of balls (rollers) which are a plurality of rolling elements 5 arranged between the inner ring 4 and the outer ring 3, and a holder (not illustrated) holding the rolling elements 5 so that rolling elements can roll. Herein, although the outer ring 3 is fixed in the above-described configuration, the inner ring 4 may be fixed, and the outer ring 3 may be rotated in the other configurations. In addition, a seal 6 is provided as a peripheral member for preventing dust from entering the vicinity of the rolling elements 5 and lubricant from leaking. Friction between the inner ring 4 and the rolling elements 5 and friction between the outer ring 3 and the rolling elements 5 are reduced by a predetermined lubrication method inside the rolling bearing. Although the lubrication method is not particularly limited, for example, grease lubrication, oil lubrication, or the like is used and is supplied to the inside of the rolling bearing. Also, the type of lubricant is not particularly limited.

A motor 10 is a driving motor, and supplies power to the rotating shaft 7 by rotation. The rotating shaft 7 is connected to an LCR meter 8 via a rotation connector 9. The rotation connector 9 may be configured by using, for example, carbon brushes, but is not limited thereto. In addition, the bearing device 2 is also electrically connected to the LCR meter 8, and the LCR meter 8 also functions as an AC power source for the bearing device 2 at this time.

The diagnosis device 1 operates as a temperature derivation device capable of executing a temperature derivation method according to the present embodiment. When diagnosing, the diagnosis device 1 instructs the LCR meter 8 to input an angular frequency $\omega$ of the AC power source and an AC voltage V as inputs and acquires impedance $|Z|$ ($|Z|$ denotes an absolute value of Z) of the bearing device 2 and a phase angle $\theta$ as outputs from the LCR meter 8. Then, the diagnosis device 1 uses these values to derive the temperature of the oil film due to the lubricant in the bearing device 2. The oil film here corresponds to, for example, a film formed by a lubricant flowing between the outer ring 3 and the rolling elements 5 or between the inner ring 4 and the rolling elements 5. The details of the oil film temperature derivation method will be described later.

The diagnosis device 1 may be realized by, for example, an information processing device including a control device, a storage device, and an output device (not illustrated). The control device may be configured with a CPU (central processing unit), an MPU (micro processing unit), a DSP (digital single processor), a dedicated circuit, or the like. The storage device is configured with volatile and non-volatile storage media such as an HDD (hard disk drive), ROM (read only memory), a RAM (random access memory), or the like, and various information can be input and output according to instructions from the control device. The output device is configured with a speaker, a light, a display device such as a liquid crystal display, or the like and notifies an operator according to the instruction from the control device. A notification method by the output device is not particularly limited, but for example, auditory notification by sound may be used, or visual notification by screen output may be used. In addition, the output device may be a network interface having a communication function and may perform a notification operation by transmitting data to an external device (not illustrated) via a network (not illustrated). A content of notification herein is not limited to notification of the time when abnormality is detected in the case where the abnormality is diagnosed, for example, based on a derivation result of the oil film temperature, but may include notification to the fact that the bearing device 2 is normal.

As illustrated in Fig. 1, the bearing device 2 is configured to include a plurality of parts. With such a configuration, the bearing device 2 can be regarded as an electric circuit. Then, by applying an AC voltage to such an electric circuit from an AC power supply (not illustrated) provided in the LCR meter 8, the electrical characteristics of the bearing device 2 can be measured. The AC voltage V applied to the electric circuit of the bearing device 2, the current I flowing through the electric circuit, and the complex impedance Z of the entire electric circuit are expressed by the following formulas (1) to (3).

$$V = |V|\exp(j\omega t) \dots (1)$$

$$I = |I|\exp(j\omega t - j\theta) \dots (2)$$

$$Z = V/I = |V/I|\exp(j\theta) = |Z|\exp(j\theta) \dots (3)$$

j: imaginary number
$\omega$: angular frequency of AC voltage
t: time
$\theta$: phase angle (phase shift between voltage and current)

By applying an AC voltage with the LCR meter 8, the impedance |Z| (|Z| indicates the absolute value of Z) and the phase angle $\theta$ of the bearing device 2 can be obtained. Using this information, the dielectric relaxation phenomenon of the lubricant in the bearing device 2 is detected. Note that the electric circuit configured in the bearing device 2 differs according to the structure of the bearing device 2. Therefore, although detailed description is omitted here, the following processing is performed assuming an electric circuit corresponding to the structure of the bearing device 2.

[Relative Dielectric Constant and Relative Dielectric Loss Factor]

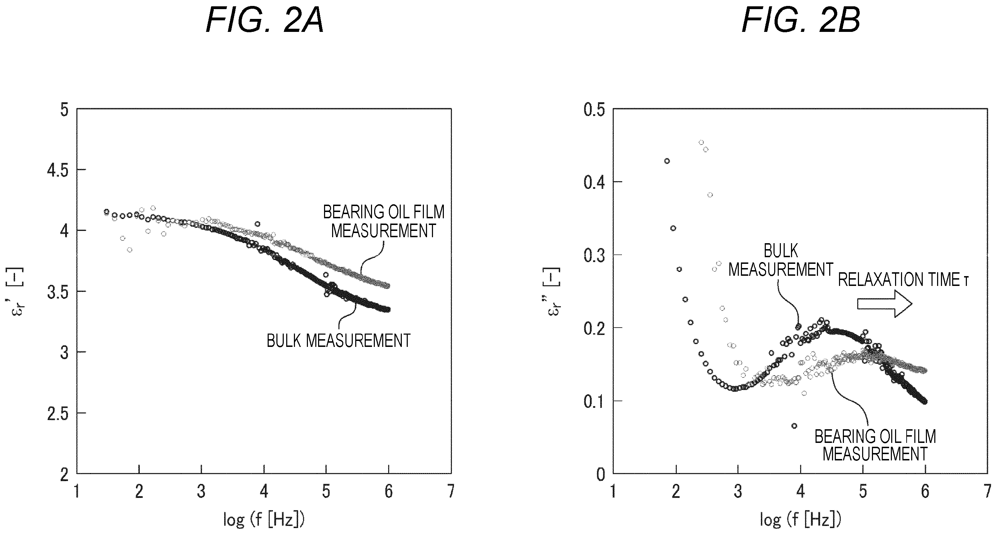

Figs. 2A and 2B are diagrams illustrating a tendency of changes in dielectric constant (relative dielectric constant and relative dielectric loss factor) according to a change in a frequency. Here, in the configuration illustrated in Fig. 1, the relative dielectric constant $\varepsilon_r'$ and the relative dielectric loss factor $\varepsilon_r''$ of the lubricant in the rolling bearing provided in the bearing device 2 are measured by conducting tests under the following conditions and the dielectric relaxation phenomenon caused by the lubricant in the rolling bearing is checked. Here, the measurement is performed in a state where the outer ring temperature is 23°C. In addition, the measurement results of the lubricant (bulk state) at a temperature of 23°C are shown for comparison with the oil film of the lubricant in the rolling bearing. Note that all the lubricants are the same, and it is assumed that the lubricant in the bulk state does not change in temperature during the measurement.

(Test Condition)

bearing: deep groove ball bearing (brand number: 6306)
rotation speed: 997 [min⁻¹]
axial load: 1000 [N]
radial load: 0 [N]
temperature: 23 [°C]
lubricant: lithium-based grease

AC voltage: 1.0 [V]
AC power frequency: 20 to 1M [Hz]

In Fig. 2A, the horizontal axis indicates a logarithm of a frequency [Hz], and the vertical axis indicates the relative dielectric constant εr'. Fig. 2A illustrates experimental values of the oil film due to the lubricant and the lubricant in a bulk state in the rolling bearing obtained as a result of the above test. As illustrated in Fig. 2A, in any measurement results, the relative dielectric constant $\varepsilon_r'$ tends to decrease (monotonically decrease) as the frequency increases.

In Fig. 2B, the horizontal axis indicates the logarithm of the frequency [Hz], and the vertical axis indicates the relative dielectric loss factor $\varepsilon_r''$. Fig. 2B illustrates experimental values of the oil film due to the lubricant and the lubricant in a bulk state in the rolling bearing obtained as a result of the above test. As illustrated in Fig. 2B, in any measurement results, after the relative dielectric loss factor $\varepsilon_r''$ once decreases as the frequency increases, the relative dielectric loss factor $\varepsilon_r''$ tends to rise and, after that, decreases again.

Referring to Figs. 2A and 2B, there is a difference in the measurement results of the oil film due to the lubricant (bulk state) and the lubricant in the rolling bearing. As illustrated in Fig. 2B, the relaxation time τ (peak position) moves to the high frequency side in the measurement result of the oil film due to the lubricant in the rolling bearing. Further, the DC conductivity σ0 is higher in the measurement result of the oil film due to the lubricant in the rolling bearing. The reason for such a difference is that the temperature of the oil film in the rolling bearing rose above the outer ring temperature (here, 23°C) due to the rolling operation of the rolling bearing.

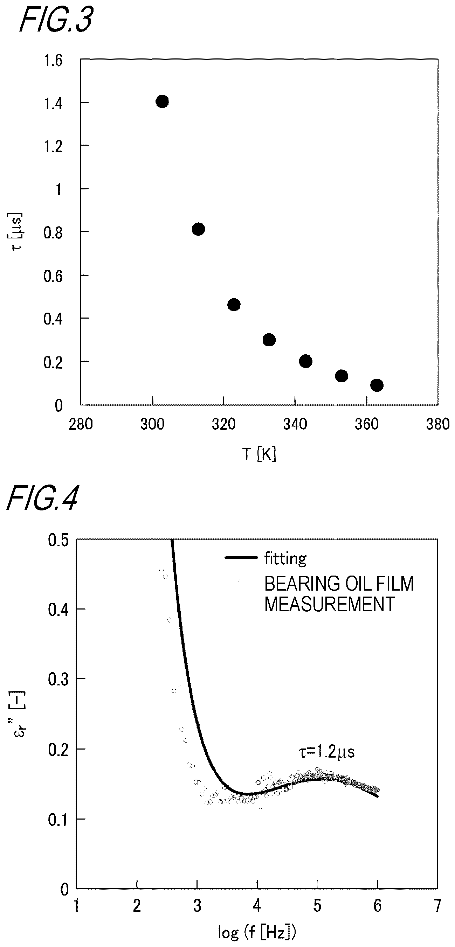

According to the claimed invention, the temperature of the oil film caused by the lubricant in the rolling bearing is derived based on the correlation between the relaxation time and the temperature of the oil film caused by the lubricant in the rolling bearing. Fig. 3 is a diagram illustrating the relationship between relaxation time τ and absolute temperature T. In Fig. 3, the vertical axis represents the relaxation time τ [μs], and the horizontal axis represents the absolute temperature T [K]. Here, an example of the measurement results of the lithium-based grease used in the test is illustrated. As illustrated in Fig. 3, the absolute temperature T increases as the relaxation time τ decreases. Referring to Fig. 3, it can be read that there is a correlation between the relaxation time τ and the absolute temperature T.

First, the relaxation time τ can be defined as the following formula (4) based on Eyring equation.
[Formula 1]

$$\tau = \frac{1}{K} = \frac{h}{k_B T} exp\left(\frac{\Delta G^{\ddagger}}{RT}\right) = \frac{h}{k_B T} exp\left(\frac{\Delta H^{\ddagger}}{RT} - \frac{\Delta S^{\ddagger}}{R}\right) \quad \cdots \quad (4)$$

τ: relaxation time [s]
K: equilibrium constant
h: Planck's constant
R: gas constant
$k_B$: Boltzmann constant
T: absolute temperature
$\Delta H^{\ddagger}$: activation enthalpy
$\Delta S^{\ddagger}$: activation entropy
$\Delta G^{\ddagger}$: activation Gibbs energy (= $\Delta H^{\ddagger}$ - $T\Delta S^{\ddagger}$)
exp: exponential function

When the above formula (4) is rearranged with respect to the absolute temperature T using the Lambert W function, it can be defined as the following formula (5).
[Formula 2]

$$T = \frac{\Delta H^{\ddagger}}{R} / W\left(\frac{\Delta H^{\ddagger} k_B \tau}{Rh} exp\left(\frac{\Delta S^{\ddagger}}{R}\right)\right) \quad \cdots \quad (5)$$

W: Lambert W function

According to the claimed invention, the above formula (5) is used in deriving the temperature of the oil film due to the lubricant in the rolling bearing under the axial load. The equilibrium constant K, Planck's constant h, gas constant R, and Boltzmann's constant $k_B$ are preset. As the values of the activation enthalpy $\Delta H^{\ddagger}$ and the activation entropy $\Delta S^{\ddagger}$, the values of the lubricant in the bulk state are measured in advance and used. More specifically, the values of the activation enthalpy $\Delta H^{\ddagger}$ and the activation entropy $\Delta S^{\ddagger}$ can be derived by applying the actual measured values using the following formula (6).
[Formula 3]

$$\ln\left(\frac{1}{\tau T}\right) = \left(-\frac{\Delta H^{\ddagger}}{R}\right)\frac{1}{T} + \left(\frac{\Delta S^{\ddagger}}{R} - \ln\left(\frac{h}{k_B}\right)\right) \quad \cdots \quad (6)$$

ln: logarithmic function

As an example of the lithium-based grease used in the above tests, 12-OH Li stearate-based grease is used as the lubricant. In this case, when the activation enthalpy $\Delta H^{\ddagger}$ and the activation entropy $\Delta S^{\ddagger}$ were obtained from the relationship between the relaxation time $\tau$ and the absolute temperature T for the lubricant at the bulk state using the above formula (6), the following values are obtained.

$$\Delta H^{\ddagger} = 39.5 \text{ [kJ·mol}^{-1}]$$

$$\Delta S^{\ddagger} = -2.5 \text{ [J·mol}^{-1}\text{·K}^{-1}]$$

[Application to Theoretical Formula]

Next, derivation of parameters related to the dielectric relaxation phenomenon due to the lubricant in the rolling bearing will be described. The electrical characteristics based on the dielectric relaxation phenomenon of the lubricant in the rolling bearing have a change tendency as illustrated in Figs. 2A and 2B. In order to specify the electrical characteristics of this change tendency, the measured values are applied (fitting) to a theoretical formula to derive various parameters. In this embodiment, the relaxation time $\tau$ is specified in order to derive the temperature of the oil film of the lubricant in the rolling bearing. According to the claimed invention, the theoretical formulas represented in the following formulas (7) to (9) are used.

[Formula 4]

$$\varepsilon_r' = \frac{1}{2}(\varepsilon_{r0} - \varepsilon_{r\infty})\left\{1 - \frac{\sinh\beta X}{\cosh\beta X + \cos\left(\frac{\beta\pi}{2}\right)}\right\} + \varepsilon_{r\infty} \quad \cdots \quad (7)$$

[Formula 5]

$$\varepsilon_r'' = \frac{\sigma_0}{2\pi f \varepsilon_0} + \frac{1}{2}\left(\varepsilon_{r0} - \varepsilon_{r\infty}\right)\frac{\sinh\left(\frac{\beta\pi}{2}\right)}{\cosh\beta X + \cos\left(\frac{\beta\pi}{2}\right)} \quad \cdots \quad (8)$$

[Formula 6]

$$X = \ln(\omega\tau) = \ln(2\pi f \tau) \quad \cdots \quad (9)$$

$\varepsilon_{r0}$: relative dielectric constant at low frequency limit
$\varepsilon_{r\infty}$: relative dielectric constant at high frequency limit
$\tau$: relaxation time [s]
$\beta$: constant representing distribution of relaxation time
$\sigma_0$: DC conductivity [S/m]
$\varepsilon_0$: dielectric constant of vacuum
$\pi$: circumference ratio
f: frequency

Fig. 4 compares the curves obtained by fitting the above theoretical formulas with experimental values obtained using the configuration illustrated in Fig. 1. Here, the description will focus on the relative dielectric loss factor $\varepsilon_r''$ for specifying the relaxation time $\tau$, which is the object of the present embodiment. In Fig. 4, the horizontal axis represents the logarithm of the frequency [Hz], and the vertical axis represents the relative dielectric loss factor $\varepsilon_r''$. As illustrated in Fig. 4, by fitting, the theoretical value can express the tendency of the experimental value for the relative dielectric loss factor.

By applying the above theoretical formula, it becomes possible to derive the relaxation time $\tau$, which is a parameter of the electrical characteristics of the lubricant. In the example illustrated in Fig. 4, 1.2 [μs] was derived for the

relaxation time $\tau$. Then, by substituting this value into the above formula (5), the absolute temperature T [K] can be calculated. As a result, 46.3 [°C] is derived as the temperature of the oil film of the lubricant in the rolling bearing.

Note that the theoretical formulas shown in formulas (7) to (9) are based on Cole-Cole type theoretical formula.

[Verification Example]

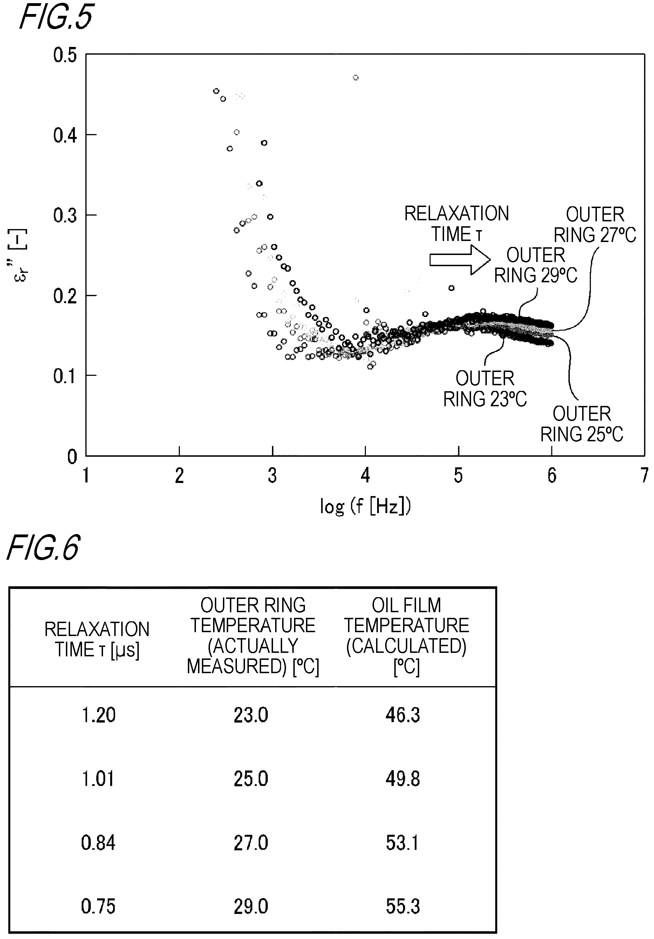

Fig. 5 is a diagram illustrating the results of measuring the relative dielectric loss factor by frequency sweep in the temperature rise of the outer ring of the rolling bearing over time using the configuration illustrated in Fig. 1. In Fig. 5, the vertical axis represents the relative dielectric loss factor $\varepsilon_r''$ and the horizontal axis represents the logarithm of the frequency [Hz]. In addition, four temperatures of 23°C, 25°C, 27°C, and 29°C are used for explanation here as the temperature of the outer ring. As illustrated in Fig. 5, as the temperature of the outer ring increases, the relaxation time $\tau$ (peak position) moves to the high frequency side. That is, it can be read that there is a correlation between the temperature and the relaxation time.

Fig. 6 is a diagram illustrating the correspondence between the oil film temperature calculated using the relaxation time $\tau$ derived from the measurement result of Fig. 5 and the formula (5), and the outer ring temperature. Referring to Fig. 6, the oil film temperature of the lubricant in the rolling bearing increases as the relaxation time $\tau$ decreases. In addition, these are all calculated values that are hotter than the actual measured outer ring temperature. That is, as illustrated in Fig. 6, the temperature derivation method according to the present embodiment can derive the temperature of the lubricant itself instead of the outer ring.

In addition, in the test examples above, the inner ring is illustrated as a rotating ring under constant speed and constant load. Similarly, the method according to the present embodiment can be applied to a configuration in which the outer ring is a rotating ring.

[Processing Flow]

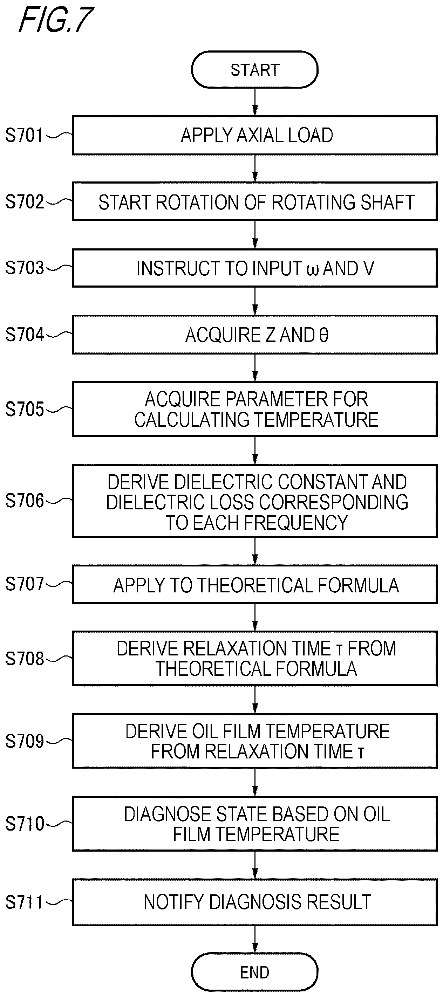

Fig. 7 is a flowchart of a temperature detection process according to this embodiment. This processing is executed by the diagnosis device 1, and for example, a control device (not illustrated) included in the diagnosis device 1 reads a program for realizing the processing according to this embodiment from a storage device (not illustrated) and executes the program may realize this processing.

At S701, the diagnosis device 1 controls the bearing device 2 so that the axial load is applied in a predetermined load direction. It is noted that the control of applying the axial load may be performed by a device other than the diagnosis device 1. At this time, the phase and the impedance in a static contact state are measured.

At S702, the diagnosis device 1 allows the motor 10 to start rotating the rotating shaft 7. Accordingly, the rotation of the inner ring 4 connected to the rotating shaft 7 is started. It is noted that the control of the motor 10 may be performed by a device other than the diagnosis device 1.

In S703, the diagnosis device 1 controls the LCR meter 8 to apply the AC voltage V having the angular frequency $\omega$ to the bearing device 2 by using an AC power supply (not illustrated) provided in the LCR meter 8. Accordingly, the AC voltage V having the angular frequency $\omega$ is applied to the bearing device 2.

At S704, the diagnosis device 1 acquires the impedance |Z| and the phase angle $\theta$ from the LCR meter 8 as outputs for the input in S703. That is, the LCR meter 8 outputs the impedance |Z| and the phase angle $\theta$ to the diagnostic device 1, as a result of the detection of the bearing device 2 for the input AC voltage V and the angle frequency $\omega$ of the AC voltage.

In S705, the diagnosis device 1 reads various parameters for deriving the temperature of the oil film from the storage unit. Specifically, the parameters used in the formula (5) are acquired for the lubricant used in the rolling bearing. These parameters are defined in advance and stored in a storage device (not illustrated) or the like.

In S706, the diagnosis device 1 derives the relative dielectric constant and relative dielectric loss factor corresponding to each frequency based on the impedance |Z| and phase angle $\theta$ obtained in S704 and the information on the AC voltage V at the angular frequency $\omega$ indicated in S703. A known method may be used for the derivation method here. Further, the LCR meter 8 may be configured to derive the relative dielectric constant and relative dielectric loss factor, and output the relative dielectric constant and relative dielectric loss factor together with the impedance |Z| and phase angle $\theta$ to the diagnosis device 1 as measurement results.

In S707, the diagnosis device 1 applies (fitting) the obtained measurement results to the theoretical formulas shown in the above formulas (7) to (9).

At S708, the diagnosis device 1 derives the relaxation time $\tau$ from the fitting result of S707. A well-known technique may be used as a method for deriving the relaxation time $\tau$ here.

At S709, the diagnosis device 1 derives the oil film temperature based on the relaxation time $\tau$ derived at S708 and various parameters acquired at S705. Specifically, the diagnosis device 1 calculates the absolute temperature T by substituting various parameters into the above formula (2) and converts it into an oil film temperature (Celsius temperature). Note that the oil film temperature may be output as an absolute temperature [K] value.

At S710, the diagnosis device 1 performs a state diagnosis of the lubricant based on the oil film temperature derived at S709. Although the contents of the diagnosis here are not particularly limited, for example, a threshold value may be set for the oil film temperature, and normality or abnormality may be diagnosed by comparison with the threshold value.

In S711, the diagnosis device 1 notifies the user of the diagnostic result obtained in S710. The notification method here is not particularly limited, but for example, the value of the oil film temperature and the transition of the temperature may be displayed on the screen. Moreover, the configuration may be such that an abnormal temperature rise or the like is notified according to the operating conditions. Then, the processing flow is ended.

As described above, according to the present embodiment, it is possible to derive the oil film temperature even when it is difficult to directly measure the oil film temperature of a lubricant in a device that uses a lubricant, such as a rolling bearing. Moreover, based on this, it becomes possible to easily diagnose the state of the device.

<Other Embodiments>

In the above embodiment, the oil film due to the lubricant in the rolling bearing has been described.

Also, in the above example, lithium-based grease was used as an example of the lubricant, but the lubricant is not limited thereto.

In addition, the present invention can also be realized by processes in which programs or applications for implementing the functions of one or more embodiments described above is supplied to a system or device by using a network, a storage medium, or the like, and one or more processors in a computer of the system or device reads and executes the programs.

In addition, the present invention may also be realized by a circuit (for example, an ASIC (application specific integrated circuit) or an FPGA (field programmable gate array)) implementing one or more functions.

Heretofore, although various embodiments have been described above with reference to the drawings, it goes without saying that the present invention is not limited to such examples. It is obvious that persons skilled in the art can conceive of various changes or modifications within the scope disclosed in the claims, and it is understood that these also belong to the technical scope of the present invention.

It is noted that this application is based on Japanese patent application (Japanese patent application 2020-163962) filed on September 29, 2020 and Japanese patent application (Japanese patent application 2021-137563) filed on August 25, 2021.

REFERENCE SIGNS LIST

1: diagnosis device
2: bearing device
3: outer ring (outer member)
4: inner ring (inner member)
5: rolling element
6: seal
7: rotating shaft
8: LCR meter
9: rotation connector
10: motor

**Claims**

1. A temperature derivation method for deriving an oil film temperature of a lubricant in a rolling bearing (2), the temperature derivation method comprising:

   a measurement step of measuring a dielectric constant of the lubricant by applying an alternating voltage while changing a frequency to an electric circuit configured by the rolling bearing (2);
   a derivation step of applying the dielectric constant measured in the measurement step to a theoretical formula to derive a relaxation time of the lubricant; and
   a calculation step of calculating the oil film temperature by using the relaxation time, wherein
   in the calculation step,

the oil film temperature is calculated using

[Formula 1]

$$T = \frac{\Delta H^{\ddagger}}{R} / W\left(\frac{\Delta H^{\ddagger} k_B \tau}{Rh} exp\left(\frac{\Delta S^{\ddagger}}{R}\right)\right)$$

wherein an activation enthalpy $\Delta H^{\ddagger}$ and an activation entropy $\Delta S^{\ddagger}$ are values of the lubricant in a bulk state, and wherein
the theoretical formulas are represented by

[Formula 2]

$$\varepsilon_r' = \frac{1}{2}(\varepsilon_{r0} - \varepsilon_{r\infty})\left\{1 - \frac{\sinh \beta X}{\cosh \beta X + \cos\left(\frac{\beta \pi}{2}\right)}\right\} + \varepsilon_{r\infty}$$

[Formula 3]

$$\varepsilon_r'' = \frac{\sigma_0}{2\pi f \varepsilon_0} + \frac{1}{2}\left(\varepsilon_{r0} - \varepsilon_{r\infty}\right)\frac{\sinh\left(\frac{\beta \pi}{2}\right)}{\cosh \beta X + \cos\left(\frac{\beta \pi}{2}\right)}$$

, and

[Formula 4]

$$X = \ln(\omega \tau) = \ln(2\pi f \tau)$$

2. The temperature derivation method according to claim 1, further comprising a diagnosis step of diagnosing a state of the rolling bearing (2) using the oil film temperature calculated in the calculation step.

3. A temperature derivation device (1) for detecting an oil film temperature of a lubricant in a rolling bearing (2), the temperature derivation device (1) comprising:

a measurement unit measuring a dielectric constant of the lubricant by applying an alternating voltage while changing a frequency to an electric circuit configured by the rolling bearing (2);
a derivation unit applying the dielectric constant measured in the measurement unit to a theoretical formula to derive a relaxation time of the lubricant; and
a calculation unit calculating the oil film temperature by using the relaxation time, wherein
in the calculation unit,
the oil film temperature is calculated using

[Formula 1]

$$T = \frac{\Delta H^{\ddagger}}{R} / W\left(\frac{\Delta H^{\ddagger} k_B \tau}{Rh} exp\left(\frac{\Delta S^{\ddagger}}{R}\right)\right)$$

wherein an activation enthalpy $\Delta H^{\ddagger}$ and an activation entropy $\Delta S^{\ddagger}$ are values of the lubricant in a bulk state, and wherein
the theoretical formulas are represented by

[Formula 2]

$$\varepsilon_r{}' = \frac{1}{2}(\varepsilon_{r0} - \varepsilon_{r\infty})\left\{1 - \frac{\sinh \beta X}{\cosh \beta X + \cos\left(\frac{\beta \pi}{2}\right)}\right\} + \varepsilon_{r\infty}$$

[Formula 3]

$$\varepsilon_r{}'' = \frac{\sigma_0}{2\pi f \varepsilon_0} + \frac{1}{2}\left(\varepsilon_{r0} - \varepsilon_{r\infty}\right)\frac{\sinh\left(\frac{\beta \pi}{2}\right)}{\cosh \beta X + \cos\left(\frac{\beta \pi}{2}\right)}$$

, and

[Formula 4]

$$X = \ln(\omega\tau) = \ln(2\pi f\tau)$$

4. A program causing a computer to execute with the temperature derivation device (1) according to claim 3:

a measurement step of measuring a dielectric constant of a lubricant in a rolling bearing (2) by applying an alternating voltage while changing a frequency to an electric circuit configured by the rolling bearing (2);
a derivation step of applying the dielectric constant measured in the measurement step to a theoretical formula to derive a relaxation time of the lubricant; and
a calculation step of calculating an oil film temperature of the lubricant by using the relaxation time, wherein in the calculation step,
the oil film temperature is calculated using

[Formula 1]

$$T = \frac{\Delta H^{\ddagger}}{R} / W\left(\frac{\Delta H^{\ddagger} k_B \tau}{Rh} exp\left(\frac{\Delta S^{\ddagger}}{R}\right)\right)$$

wherein an activation enthalpy $\Delta H^{\ddagger}$ and an activation entropy $\Delta S^{\ddagger}$ are values of the lubricant in a bulk state, and wherein
the theoretical formulas are represented by

[Formula 2]

$$\varepsilon_r{}' = \frac{1}{2}(\varepsilon_{r0} - \varepsilon_{r\infty})\left\{1 - \frac{\sinh \beta X}{\cosh \beta X + \cos\left(\frac{\beta \pi}{2}\right)}\right\} + \varepsilon_{r\infty}$$

[Formula 3]

$$\varepsilon_r{}'' = \frac{\sigma_0}{2\pi f \varepsilon_0} + \frac{1}{2}\left(\varepsilon_{r0} - \varepsilon_{r\infty}\right)\frac{\sinh\left(\frac{\beta \pi}{2}\right)}{\cosh \beta X + \cos\left(\frac{\beta \pi}{2}\right)}$$

, and

[Formula 4]

$$X = \ln(\omega\tau) = \ln(2\pi f\tau)$$

**Patentansprüche**

1. Temperaturableitungsverfahren zur Ableitung der Ölfilmtemperatur eines Schmiermittels in einem Wälzlager (2), wobei das Temperaturableitungsverfahren umfasst:

   einen Messschritt zum Messen einer Dielektrizitätskonstante des Schmiermittels durch Anlegen einer Wechselspannung unter Änderung einer Frequenz an einen durch das Wälzlager (2) konfigurierten Stromkreis;
   einen Ableitungsschritt zum Anwenden der in dem Messschritt gemessenen Dielektrizitätskonstante auf eine theoretische Formel, um eine Relaxationszeit des Schmiermittels abzuleiten; und
   einen Berechnungsschritt zum Berechnen der Ölfilmtemperatur unter Verwendung der Relaxationszeit, wobei in dem Berechnungsschritt,
   die Ölfilmtemperatur berechnet wird unter Verwendung von

   [Formel 1]

   $$T = \frac{\Delta H^{\ddagger}}{R} / W\left(\frac{\Delta H^{\ddagger} k_B \tau}{Rh} exp\left(\frac{\Delta S^{\ddagger}}{R}\right)\right)$$

   wobei eine Aktivierungsenthalpie $\Delta H^{\ddagger}$ und eine Aktivierungsentropie $\Delta S^{\ddagger}$ Werte des Schmiermittels in einem Volumenzustand sind, und wobei
   die theoretischen Formeln dargestellt sind durch

   [Formel 2]

   $$\varepsilon'_r = \frac{1}{2}(\varepsilon_{r0} - \varepsilon_{r\infty})\left\{1 - \frac{\sinh\beta X}{\cosh\beta X + \cos\left(\frac{\beta\pi}{2}\right)}\right\} + \varepsilon_{r\infty}$$

   [Formel 3]

   $$\varepsilon''_r = \frac{\sigma_0}{2\pi f \varepsilon_0} + \frac{1}{2}(\varepsilon_{r0} - \varepsilon_{r\infty})\frac{\sinh\beta X}{\cosh\beta X + \cos\left(\frac{\beta\pi}{2}\right)}$$

   und

   [Formel 4]

   $$X = \ln(\omega\tau) = \ln(2\pi f \tau)$$

2. Temperaturableitungsverfahren nach Anspruch 1, des Weiteren umfassend einen Diagnoseschritt zum Diagnostizieren eines Zustands des Wälzlagers (2) unter Verwendung der in dem Berechnungsschritt berechneten Ölfilmtemperatur.

3. Temperaturableitungsvorrichtung (1) zum Erfassen einer Ölfilmtemperatur eines Schmiermittels in einem Wälzlager (2), wobei die Temperaturableitungsvorrichtung (1) umfasst:

   eine Messeinheit zum Messen einer Dielektrizitätskonstante des Schmiermittels durch Anlegen einer Wechselspannung unter Änderung einer Frequenz an einen durch das Wälzlager (2) konfigurierten Stromkreis;
   eine Ableitungseinheit zum Anwenden der in der Messeinheit gemessenen Dielektrizitätskonstante auf eine theoretische Formel, um eine Relaxationszeit des Schmiermittels abzuleiten; und
eine Berechnungseinheit zum Berechnen der Ölfilmtemperatur unter Verwendung der Relaxationszeit, wobei
in der Berechnungseinheit
die Ölfilmtemperatur berechnet wird unter Verwendung von

[Formel 1]

$$T = \frac{\Delta H^{\ddagger}}{R} / W\left(\frac{\Delta H^{\ddagger} k_B \tau}{Rh} exp\left(\frac{\Delta S^{\ddagger}}{R}\right)\right)$$

wobei eine Aktivierungsenthalpie $\Delta H^{\ddagger}$ und eine Aktivierungsentropie $\Delta S^{\ddagger}$ Werte des Schmiermittels in einem Volumenzustand sind, und wobei
die theoretischen Formeln dargestellt sind durch

[Formel 2]

$$\varepsilon'_r = \frac{1}{2}(\varepsilon_{r0} - \varepsilon_{r\infty})\left\{1 - \frac{\sinh \beta X}{\cosh \beta X + \cos\left(\frac{\beta \pi}{2}\right)}\right\} + \varepsilon_{r\infty}$$

[Formel 3]

$$\varepsilon''_r = \frac{\sigma_0}{2\pi f \varepsilon_0} + \frac{1}{2}(\varepsilon_{r0} - \varepsilon_{r\infty})\frac{\sinh \beta X}{\cosh \beta X + \cos\left(\frac{\beta \pi}{2}\right)}$$

und

[Formel 4]

$$X = \ln(\omega\tau) = \ln(2\pi f \tau)$$

4. Programm, das einen Computer veranlasst, mit der Temperaturableitungsvorrichtung (1) nach Anspruch 3 Folgendes auszuführen:

einen Messschritt zum Messen einer Dielektrizitätskonstante eines Schmiermittels in einem Wälzlager (2) durch Anlegen einer Wechselspannung unter Änderung einer Frequenz an einen durch das Wälzlager (2) konfigurierten Stromkreis;
einen Ableitungsschritt zum Anwenden der in dem Messschritt gemessenen Dielektrizitätskonstante auf eine theoretische Formel, um eine Relaxationszeit des Schmiermittels abzuleiten; und
einen Berechnungsschritt zum Berechnen einer Ölfilmtemperatur des Schmiermittels unter Verwendung der Relaxationszeit, wobei
in dem Berechnungsschritt,
die Ölfilmtemperatur berechnet wird unter Verwendung von

[Formel 1]

$$T = \frac{\Delta H^{\ddagger}}{R} / W\left(\frac{\Delta H^{\ddagger} k_B \tau}{Rh} exp\left(\frac{\Delta S^{\ddagger}}{R}\right)\right)$$

wobei eine Aktivierungsenthalpie $\Delta H^{\ddagger}$ und eine Aktivierungsentropie $\Delta S^{\ddagger}$ Werte des Schmiermittels in einem Volumenzustand sind, und wobei
die theoretischen Formeln dargestellt sind durch

[Formel 2]

$$\varepsilon'_r = \frac{1}{2}(\varepsilon_{r0} - \varepsilon_{r\infty})\left\{1 - \frac{\sinh \beta X}{\cosh \beta X + \cos\left(\frac{\beta \pi}{2}\right)}\right\} + \varepsilon_{r\infty}$$

[Formel 3]

$$\varepsilon''_r = \frac{\sigma_0}{2\pi f \varepsilon_0} + \frac{1}{2}(\varepsilon_{r0} - \varepsilon_{r\infty})\frac{\sinh \beta X}{\cosh \beta X + \cos\left(\frac{\beta \pi}{2}\right)}$$

und

[Formel 4]

$$X = \ln(\omega\tau) = \ln(2\pi f \tau)$$

**Revendications**

1. Procédé de dérivation de température pour dériver une température de film d'huile d'un lubrifiant dans un roulement à billes (2), le procédé de dérivation de température comprenant :

   une étape de mesure consistant à mesurer une constante diélectrique du lubrifiant en appliquant une tension alternative, tout en changeant une fréquence, à un circuit électrique configuré par le roulement à billes (2) ;
   une étape de dérivation consistant à appliquer la constante diélectrique mesurée lors de l'étape de mesure à une formule théorique afin de dériver un temps de relaxation du lubrifiant ; et
   une étape de calcul consistant à calculer la température de film d'huile en utilisant le temps de relaxation, dans lequel
   lors de l'étape de calcul,
   la température de film d'huile est calculée en utilisant

[Formule 1] :

$$T = \frac{\Delta H^{\ddagger}}{R} / W\left(\frac{\Delta H^{\ddagger} k_B \tau}{Rh} exp\left(\frac{\Delta S^{\ddagger}}{R}\right)\right)$$

où une enthalpie d'activation $\Delta H^{\ddagger}$ et une entropie d'activation $\Delta S^{\ddagger}$ sont des valeurs du lubrifiant à l'état massif, et dans lequel
les formules théoriques sont représentées par

[Formule 2] :

$$\varepsilon_r' = \frac{1}{2}(\varepsilon_{r0} - \varepsilon_{r\infty})\left\{1 - \frac{\sinh\beta X}{\cosh\beta X + \cos\left(\frac{\beta\pi}{2}\right)}\right\} + \varepsilon_{r\infty}$$

[Formule 3] :

$$\varepsilon_r'' = \frac{\sigma_0}{2\pi f \varepsilon_0} + \frac{1}{2}\left(\varepsilon_{r0} - \varepsilon_{r\infty}\right)\frac{\sinh\left(\frac{\beta\pi}{2}\right)}{\cosh\beta X + \cos\left(\frac{\beta\pi}{2}\right)}$$

et

[Formule 4] :
$$X = \ln(\omega t) = \ln(2\pi f \tau).$$

2. Procédé de dérivation de température selon la revendication 1, comprenant en outre une étape de diagnostic consistant à diagnostiquer un état du roulement à billes (2) à l'aide de la température de film d'huile calculée lors de l'étape de calcul.

3. Dispositif de dérivation de température (1) pour détecter une température de film d'huile d'un lubrifiant dans un roulement à billes (2), le dispositif de dérivation de température (1) comprenant :

une unité de mesure mesurant une constante diélectrique du lubrifiant en appliquant une tension alternative, tout en changeant une fréquence, à un circuit électrique configuré par le roulement à billes (2) ;
une unité de dérivation appliquant la constante diélectrique mesurée dans l'unité de mesure à une formule théorique afin de dériver un temps de relaxation du lubrifiant ; et
une unité de calcul calculant la température de film d'huile en utilisant le temps de relaxation, dans lequel
dans l'unité de calcul,
la température de film d'huile est calculée en utilisant

[Formule 1] :

$$T = \frac{\Delta H^{\ddagger}}{R}\bigg/ W\left(\frac{\Delta H^{\ddagger} k_B \tau}{Rh}\exp\left(\frac{\Delta S^{\ddagger}}{R}\right)\right)$$

où une enthalpie d'activation $\Delta H^{\ddagger}$ et une entropie d'activation $\Delta S^{\ddagger}$ sont des valeurs du lubrifiant à l'état massif, et dans lequel
les formules théoriques sont représentées par

[Formule 2] :

$$\varepsilon_r' = \frac{1}{2}(\varepsilon_{r0} - \varepsilon_{r\infty})\left\{1 - \frac{\sinh\beta X}{\cosh\beta X + \cos\left(\frac{\beta\pi}{2}\right)}\right\} + \varepsilon_{r\infty}$$

[Formule 3] :

$$\varepsilon_r{}'{}' = \frac{\sigma_0}{2\pi f \varepsilon_0} + \frac{1}{2}\left(\varepsilon_{r0} - \varepsilon_{r\infty}\right)\frac{\sinh\left(\frac{\beta\pi}{2}\right)}{\cosh\beta X + \cos\left(\frac{\beta\pi}{2}\right)}$$

, et

[Formule 4] :

X = ln(ωt) = ln(2π$f$τ).

4. Programme amenant un ordinateur à exécuter, avec le dispositif de dérivation de température (1) selon la revendication 3 :

une étape de mesure consistant à mesurer une constante diélectrique d'un lubrifiant dans un roulement à billes (2) en appliquant une tension alternative, tout en changeant une fréquence, à un circuit électrique configuré par le roulement à billes (2) ;
une étape de dérivation consistant à appliquer la constante diélectrique mesurée lors de l'étape de mesure à une formule théorique afin de dériver un temps de relaxation du lubrifiant ; et
une étape de calcul consistant à calculer une température de film d'huile du lubrifiant en utilisant le temps de relaxation, dans lequel
lors de l'étape de calcul,
la température de film d'huile est calculée en utilisant

[Formule 1] :

$$T = \frac{\Delta H^{\ddagger}}{R} / W\left(\frac{\Delta H^{\ddagger} k_B \tau}{Rh} exp\left(\frac{\Delta S^{\ddagger}}{R}\right)\right)$$

où une enthalpie d'activation $\Delta H^{\ddagger}$ et une entropie d'activation $\Delta S^{\ddagger}$ sont des valeurs du lubrifiant à l'état massif, et dans lequel
les formules théoriques sont représentées par

[Formule 2] :

$$\varepsilon_r{}' = \frac{1}{2}\left(\varepsilon_{r0} - \varepsilon_{r\infty}\right)\left\{1 - \frac{\sinh\beta X}{\cosh\beta X + \cos\left(\frac{\beta\pi}{2}\right)}\right\} + \varepsilon_{r\infty}$$

[Formule 3] :

$$\varepsilon_r{}'{}' = \frac{\sigma_0}{2\pi f \varepsilon_0} + \frac{1}{2}\left(\varepsilon_{r0} - \varepsilon_{r\infty}\right)\frac{\sinh\left(\frac{\beta\pi}{2}\right)}{\cosh\beta X + \cos\left(\frac{\beta\pi}{2}\right)}$$

, et

[Formule 4] :

X = ln(ωt) = ln(2π$f$τ).

*FIG.1*

## FIG. 2A

## FIG. 2B

*FIG.3*

*FIG.4*

## FIG.5

## FIG.6

| RELAXATION TIME τ [μs] | OUTER RING TEMPERATURE (ACTUALLY MEASURED) [°C] | OIL FILM TEMPERATURE (CALCULATED) [°C] |
| --- | --- | --- |
| 1.20 | 23.0 | 46.3 |
| 1.01 | 25.0 | 49.8 |
| 0.84 | 27.0 | 53.1 |
| 0.75 | 29.0 | 55.3 |

## FIG.7

```
                    START

S701 ──  APPLY AXIAL LOAD

S702 ──  START ROTATION OF ROTATING SHAFT

S703 ──  INSTRUCT TO INPUT ω AND V

S704 ──  ACQUIRE Z AND θ

S705 ──  ACQUIRE PARAMETER FOR
         CALCULATING TEMPERATURE

S706 ──  DERIVE DIELECTRIC CONSTANT AND
         DIELECTRIC LOSS CORRESPONDING
         TO EACH FREQUENCY

S707 ──  APPLY TO THEORETICAL FORMULA

S708 ──  DERIVE RELAXATION TIME τ FROM
         THEORETICAL FORMULA

S709 ──  DERIVE OIL FILM TEMPERATURE
         FROM RELAXATION TIME τ

S710 ──  DIAGNOSE STATE BASED ON OIL
         FILM TEMPERATURE

S711 ──  NOTIFY DIAGNOSIS RESULT

                     END
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2019211317 A
- JP 2020163962 A
- JP 2021137563 A

**Non-patent literature cited in the description**

- **HAKIM RAYMOND M**. Distribution of Relaxation Times in an Insulating Oil. *IEEE Transactions on Electrical Insulation*, 01 December 1971, vol. EI-6 (4), ISSN 0018-9367, 158-164